# EUROPEAN PATENT APPLICATION

(11) **EP 1 464 377 A1**
(43) Date of publication of application: **06.10.2004**
(21) Application number: 04006395.0
(22) Date of filing: 17.03.2004
(51) Int. Cl.: B01D 63/10, B01D 65/00, B01D 65/08

(54) **Spiral separation membrane element**

(30) Priority: 20.03.2003 JP 2003078129
(71) Applicant: NITTO DENKO CORPORATION, Osaka (JP)
(72) Inventor: Hirokawa, Mitsuaki, c/o Nitto Denko Corp., Ibaraki-shi, Osaka (JP); Ando, Masaaki, c/o Nitto Denko Corp., Ibaraki-shi, Osaka (JP); Chikura, Shinichi, c/o Nitto Denko Corp., Ibaraki-shi, Osaka (JP); Ishihara, Satoru, c/o Nitto Denko Corp., Ibaraki-shi, Osaka (JP)
(74) Representative: Grünecker, Kinkeldey, Stockmair & Schwanhäusser Anwaltssozietät

(57) **Abstract**

A spiral separation membrane element which can attain a reduced pressure loss in the feed-side passage and is difficult to encounter the problem of flow inhibition or clogging in the feed-side passage. The spiral separation membrane element comprises a perforated cored central tube and, wound therearound, one or more separation membranes, one or more feed-side passage materials, and one or more permeation-side passage materials, wherein the feed-side passage materials each have warps 1 extending almost parallel with the direction of flow of a feed liquid and wefts 2 which are thinner than the warps 1, and a ratio of a pitch of the warps L1 to a pitch of the wefts L2 being from 1/1.5 to 1/6.

## Description

### FIELD OF THE INVENTION

The present invention relates to spiral separation membrane elements for separating ingredients suspended or dissolved in liquids More particularly, the present invention relates to spiral separation membrane elements having a built-in feed-side passage material having a structure which can attain a lower pressure loss on the feed side than in related-art techniques and enables trapped suspended matters to be efficiently discharged.

### DESCRIPTION OF THE RELATED ART

Conventional spiral separation membrane elements have a structure comprising a perforated cored central tube and, wound therearound, one or more separation membranes, one or more feed-side passage materials, and one or more permeation-side passage materials. In the case of reverse osmosis membranes, a rhombic net-like passage material is used as a feed-side passage material It has been reported that use of this passage material is effective in reducing a pressure loss (see, for example, JP-A-11-235520, JP-A-2000-000437 and JP-A-2000-042378

On the other hand, a ladder-shaped net-like passage material comprising warps extending parallel with the direction of flow of a feed liquid and wefts which connect the warps is used for the purpose of reducing the pressure loss in the feed-side passage (see, for example, JP-A-05-168869) The invention disclosed in JP-A-05-168869 is based on neither the relationship between warp thickness and weft thickness nor the relationship between warp pitch and weft pitch, and there is no description therein concerning the thickness of the warps and wefts

However, the conventional ladder-shaped net-like passage material, in which the wefts usually have the same diameter as the warps, has a disadvantage that the wefts inhibit the flow of a feed liquid and this is causative of passage clogging by suspended ingredients In other words, a feed-side passage material is required to have the function of accelerating the renewal of the membrane surface to diminish concentration polarization besides the function of minimizing the pressure loss on the feed side However, the conventional feed-side passage material has a problem that ingredients suspended in a feed liquid are caught by wefts of the passage material and this increases the flow resistance or causes clogging. There also is a problem that ingredients suspended in a feed liquid are caught by wefts of the feed-side passage material and thus accumulate on the membrane surface to reduce the effective membrane area

Furthermore, the ladder-shaped net-like passage material was found to be more apt to pose the above-described problems concerning flow inhibition and clogging when the warp pitch is almost the same as the weft pitch.

### SUMMARY OF THE INVENTION

Accordingly, an object of the present invention is to provide a spiral separation membrane element which can attain a reduced pressure loss in the feed-side passage and is difficult to encounter the problem of flow inhibition or clogging in the feed-side passage

The present inventors made intensive investigations on the thickness and pitches of the wefts and warps of ladder-shaped net-like passage materials in order to accomplish the above object As a result, it has been found that the object can be accomplished by regulating the proportion of the thickness of these and the proportion of the pitches of these so as to be within given ranges The present invention has been achieved based on this finding

The present invention provides a spiral separation membrane element comprising a perforated cored central tube and, wound therearound, one or more separation membranes, one or more feed-side passage materials, and one or more permeation-side passage materials, wherein the feed-side passage materials each have warps extending almost parallel with the direction of flow of a feed liquid and wefts which are thinner than the warps, a ratio of a pitch of the warps to a pitch of the wefts is 1/1.5 to 1/6. The pitch of the warps or wefts herein is the pitch of the centers of the warps or wefts. In the case of the wefts, the pitch thereof means the distance between adjacent weft centers as measured in the direction of the warps.

According to the present invention, since each feed-side passage material has wefts which are thinner than the warps and has a moderate value of the warp pitch/weft pitch ratio, the pressure loss in the feed-side passage can be sufficiently reduced and the feed-side passage can be made to less encounter the problem of flow inhibition or clogging.

In the spiral separation membrane element of the invention described above, the feed-side passage material preferably has a value of the warp diameter/weft diameter ratio of 2.5/1 or smaller. In this case, since the warp pitch/weft pitch ratio and the warp diameter/weft diameter ratio are moderate values, the pressure loss in the feed-side passage can be further reduced and the feed-side passage can be made to even less encounter the problem of flow inhibition or clogging

The present invention further provides another spiral separation membrane element comprising a perforated cored central tube and, wound therearound, one or more separation membranes, one or more feed-side passage materials, and one or more permeation-side passage materials, wherein the feed-side passage materials each have warps extending almost parallel with the direction of flow of a feed liquid and wefts which are thinner than the warps, and a ratio of the warp diameter to the weft diameter is 2.5/1 or smaller.

The term warp diameter or weft diameter herein has the following meaning. When the warps or wefts have a circular cross section, that term means the diameter of the section. When the cross section thereof is not circular, that term means the length of the axis in the direction of the thickness of the feed-side passage material

According to the present invention, since the feed-side passage material has wefts which are thinner than the warps and has a moderate value of the warp diameter/weft diameter ratio, the pressure loss in the feed-side passage can be sufficiently reduced and the feed-side passage can be made to less encounter the problem of flow inhibition or clogging

### BRIEF DESCRIPTION OF THE DRAWINGS

Fig. 1A is a front view showing one example of the feed-side passage materials in the spiral separation membrane elements according to the present invention;
Fig 1B is a side view showing one example of the feed-side passage materials in the spiral separation membrane elements according to the present invention;
Fig 2 is a graphic presentation showing the relationship between flow rate and pressure loss in the Examples in the case where the warp pitch/weft pitch ratio was changed,
Fig 3 is a graphic presentation showing the relationship between flow rate and pressure loss in an Example in the case where the warp diameter/weft diameter ratio was changed;
Fig 4 is a graphic presentation showing the relationship between flow rate and pressure loss in Example 4 and Comparative Example 5, and
Fig 5 is a graphic presentation showing the relationship between flow rate and pressure loss in Example 5 and Comparative Example 6

### In the drawings:

1 : warp
2 : weft
L1 : warp pitch
L2 : weft pitch
D1 : warp diameter
D2 : weft diameter

### DETAILED DESCRIPTION OF THE INVENTION

The present invention is described in detail below by reference to the accompanying drawings.

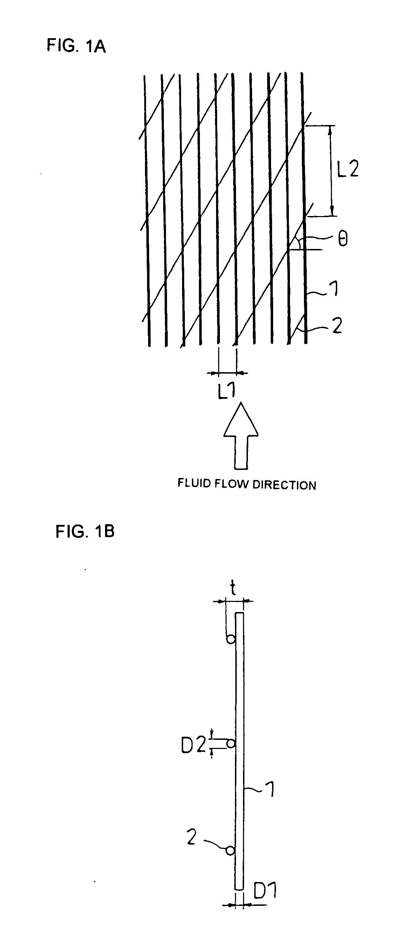

Fig. 1A is a front view showing one example of the feed-side passage materials in the spiral separation membrane element according to the present invention, and Fig 1B is a side view showing one example of the feed-side passage materials in the spiral separation membrane element according to the present invention.

The spiral separation membrane elements of the present invention have a structure comprising a perforated cored central tube and, wound therearound, one or more separation membranes, one or more feed-side passage materials, and one or more permeation-side passage materials This type of membrane elements is described in detail in JP-A-11-235520, JP-A-2000-000437, JP-A-2000-042378 and JP-A-05-168869 With respect to components other than the feed-side passage materials, any conventional separation membranes, permeation-side passage materials, cored central tubes, and the like can be used For example, in the case where two or more feed-side passage materials and two or more permeation-side passage materials are used. the membrane element has a structure in which two or more membrane leaves have been wound around a cored central tube

In one embodiment of the present invention, the feed-side passage materials have warps 1 extending almost parallel with the flow of a feed liquid and wefts 2 which are thinner than the warps 1, and the ratio of the warp pitch to the weft pitch (L1/L2) is preferably 1/1.5 to 1/6, and more preferably 1/3 to 1/5. In case where the weft pitch is larger than the upper limit in that range, the feed-side passage material tends to have a reduced strength, making it difficult to stably maintain a passage. Problems such as the increase in resistance caused when the suspended ingredients present in a feed liquid are caught by the feed-side passage material and a problem concerning a diminution of pressure loss in the feed-side passage can be eliminated by thus reducing the number of wefts 2 crossing the direction of flow of a feed liquid.

Namely, in conventional membrane elements, the weft pitch L2 is 3-4 mm and a feed liquid meets 250-330 wefts 2 when it passes through one element having a length of about 1 m. However, by increasing the conventional weft pitch fourfold, i e., to 16 mm, the number of wefts can be reduced to 70. Although the pressure loss in the feed-side passage material is not proportional to the number of wefts, to reduce the number thereof is highly effective Furthermore, the accumulation of suspended ingredients present in a feed liquid on the feed-side passage material and on the membrane surface in a filtration step is unavoidable However, this accumulation can be diminished by increasing the weft pitch L2 and thereby reducing the number of wefts and improving suitability for discharge in a back washing step.

From the standpoints of the stability of passage material nets (when they are made of polypropylene and polyethylene) and the degree of reduction in pressure loss (about 50% from the value for conventional passage materials), the weft pitch L2 is most preferably about 16 mm when the warp pitch L1 is 4 mm Namely, the ratio of the warp pitch to the weft pitch is most preferably about 1:4

Specific numerical ranges are as follows The warp pitch L1 is preferably 2.5-5.0 mm and the weft pitch L2 is preferably 10-20 mm

The spiral separation membrane elements of the invention can be utilized in any filtration techniques such as reverse osmosis filtration, ultrafiltration, and microfiltration. However, the feed-side passage materials described above exhibit their effects especially when used mainly for clarification.

Examples of the material of the feed-side passage materials include resins such as polypropylene, polyethylene, poly(ethylene terephthalate) (PET), and polyamides, natural polymers, and rubbers. However, resins are preferably used.

The warps 1 and the wefts 2 may be multifilament yarns or monofilament yarns. However, monofilament yarns are preferred because they are difficult to constitute an obstacle to the passage. The warps 1 may have been fixed to the wefts 2 by fusion bonding, adhesion, etc., or the feed-side passage materials may be woven fabrics. It is, however, preferred that the passage materials be ones in which the warps 1 have been fixed to the wefts 2, from the standpoint of stably maintaining the passage

Furthermore, a warp 1/weft 2 intersection angle θ may be, for example, 0-80° However, from the standpoint of diminishing the flow resistance caused by the wefts 2, the angle θ is preferably 30-70°, and more preferably 45-60° The arrangement of warps 1 and wefts 2 is preferably such that all the wefts 2 are disposed on one side of the warps 1 arranged, as shown in Fig 1B This structure has the effect of reducing the resistance of the feed-side passage material

On the other hand, the feed-side passage materials, which have warps extending almost parallel with the direction of flow of a feed liquid and wefts which are thinner than the warps, preferably have a warp diameter/weft diameter ratio (D1/D2) of 2.5/1 or smaller, especially 1.1/1 to 2.3/1 By thus regulating the diameter D2 of the wefts to such a small value, the same effect as described above is obtained even when the cross-sectional area of the feed-liquid passage is increased

Namely, in conventional membrane elements, the wefts 2 have the same diameter as the warps 1 and the passage cross-sectional area for the feed-side passage materials is small for the large thickness t of the passage materials By using thinner wefts 2 and using thicker warps 1 while maintaining the same passage material thickness t, the passage material can be made to have a larger passage cross-sectional area. In conventional passage materials having a thickness of 0.8 mm, the diameter of the warps 1 and that of the wefts 2 are about 0 45 mm because the warps 1 have the same diameter as the wefts 2 When the ratio of the warp diameter to the weft diameter (D1/D2) is 2:1 and the passage material thickness is 0 8 mm, then the diameter of the warps and that of the wefts are about 0.6 mm and about 0 3 mm, respectively Although this passage material has the same thickness as the conventional ones, the warp diameter therein is 1.33 times the warp diameter in the conventional ones; the warp diameter is the substantial passage material thickness when the weft pitch is long In applications where suspended ingredients of 100-200 µm are removed, the relationship between the warp diameter and the weft diameter influences the accumulation of suspended matters on the passage material

From the standpoint of the stability of passage material nets (when they are made of polypropylene and polyethylene) and the degree of reduction in pressure loss (about 50% from the value for conventional passage materials), the thickness t of the passage material as measured at warp/weft intersections is preferably 0.5-1 5 mm, and more preferably 0.7-1.1 mm, and the warp diameter/weft diameter ratio (D1/D2) is most preferably about 2/1.

The present invention is described in more detail by reference to the following Examples specifically showing the constitutions and effects of the present invention, but it should be understood that the invention is not construed as being limited thereto.

### EXAMPLE 1

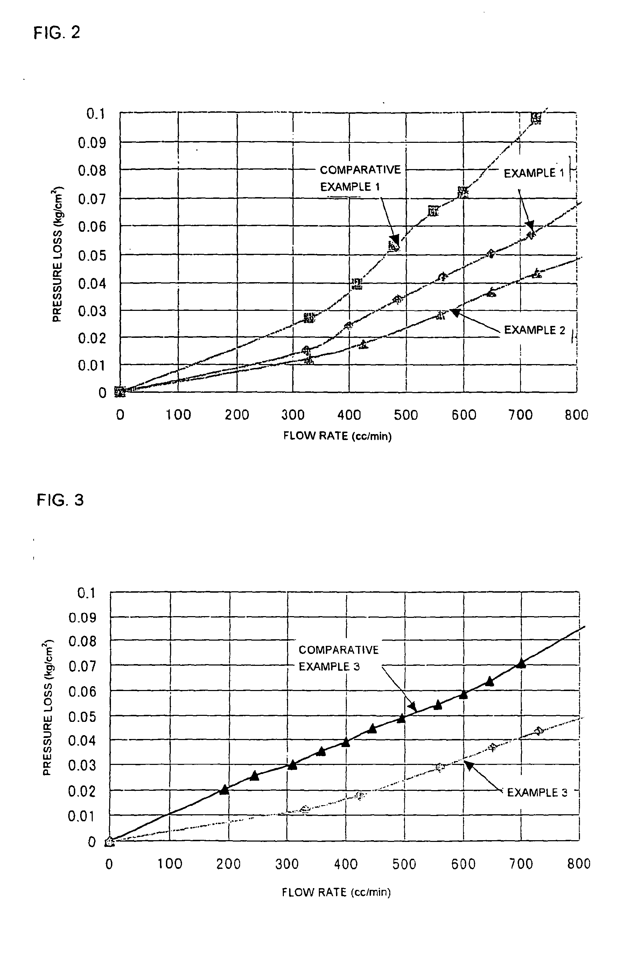

A polypropylene net which had a warp diameter of 0.6 mm, a warp diameter/weft diameter ratio of 2:1, a thickness at the intersection of warp and weft of 0.71 mm, a warp pitch of 4 mm, a warp pitch/weft pitch ratio of 1:2, and a warp/weft intersection angle of 50° was set, as a feed-side passage material for use in the present invention (see Fig. 1), on a parallel flat cell (C10-T; passage width: 35 mm, passage length: 145 mm). Pure water was passed through the cell to measure the flow rate and pressure loss. The results obtained are shown in Fig. 2

### EXAMPLE 2

A polypropylene net which had a warp diameter of 0.6 mm, a warp diameter/weft diameter ratio of 2 :1, a thickness at the intersection of warp and weft of 0 71 mm, a warp pitch of 4 mm, a warp pitch/weft pitch ratio of 1:4, and a warp/weft intersection angle of 50° was set, as a feed-side passage material for use in the present invention (see Fig. 1), on a parallel flat cell (C10-T, passage width 35 mm, passage length: 145 mm) Pure water was passed through the cell to measure the flow rate and pressure loss. The results obtained are shown in Fig. 2

### COMPARATIVE EXAMPLE 1

A polypropylene net which had a warp diameter of 0 6 mm, a warp diameter/weft diameter ratio of 2:1, a thickness at the intersection of warp and weft of 0.71 mm, a warp pitch of 4 mm, a warp pitch/weft pitch ratio of 1:1, and a warp/weft intersection angle of 50° was set on a parallel flat cell (C10-T, passage width. 35 mm, passage length 145 mm) Pure water was passed through the cell to measure the flow rate and pressure loss The results obtained are shown in Fig. 2

### COMPARATIVE EXAMPLE 2

A polypropylene net which had a warp diameter of 0.6 mm, a warp diameter/weft diameter ratio of 2:1, a thickness at the intersection of warp and weft of 0.71 mm, a warp pitch of 4 mm, a warp pitch/weft pitch ratio of 1:8, and a warp/weft intersection angle of 50° showed a strength insufficient for use as a passage material. As a result, this net could not retain its shape Because of this, a stable measurement of pressure loss as in Examples 1 and 2 was impossible

As shown in Fig. 2, the passage materials of Examples 1 and 2 could attain a pressure loss reduced to about a half of that for the conventional passage material shown in Comparative Example 1.

### EXAMPLE 3

A polypropylene net which had a warp diameter of 0.6 mm, a warp diameter/weft diameter ratio of 2:1, a thickness at the intersection of warp and weft of 0.71 mm, a warp pitch of 4 mm, a warp pitch/weft pitch ratio of 1:4, and a warp/weft intersection angle of 50° was set, as a feed-side passage material for use in the present invention (see Fig. 1), on a parallel flat cell (C10-T, passage width 35 mm, passage length 145 mm). Pure water was passed through the cell to measure the flow rate and pressure loss. The results obtained are shown in Fig 3

### COMPARATIVE EXAMPLE 3

A polypropylene net which had a warp diameter of 0.3 mm, a warp diameter/weft diameter ratio of 1:2, a thickness at the intersection of warp and weft of 0.71 mm, a warp pitch of 4 mm, a warp pitch/weft pitch ratio of 1:4, and a warp/weft intersection angle of 50° was set on a parallel flat cell (C10-T, passage width: 35 mm, passage length: 145 mm). Pure water was passed through the cell to measure the flow rate and pressure loss The results obtained are shown in Fig 3

### COMPARATIVE EXAMPLE 4

A polypropylene net which had a warp diameter of 0.6 mm, a warp diameter/weft diameter ratio of 3:1, a thickness at the intersection of warp and weft of 0.7 mm, a warp pitch of 4 mm, a warp pitch/weft pitch ratio of 1:4, and a warp/weft intersection angle of 50° showed a strength insufficient for use as a passage material. As a result, this net could not retain its shape Because of this, a stable measurement of pressure loss as in Example 1 was impossible

### EXAMPLE 4

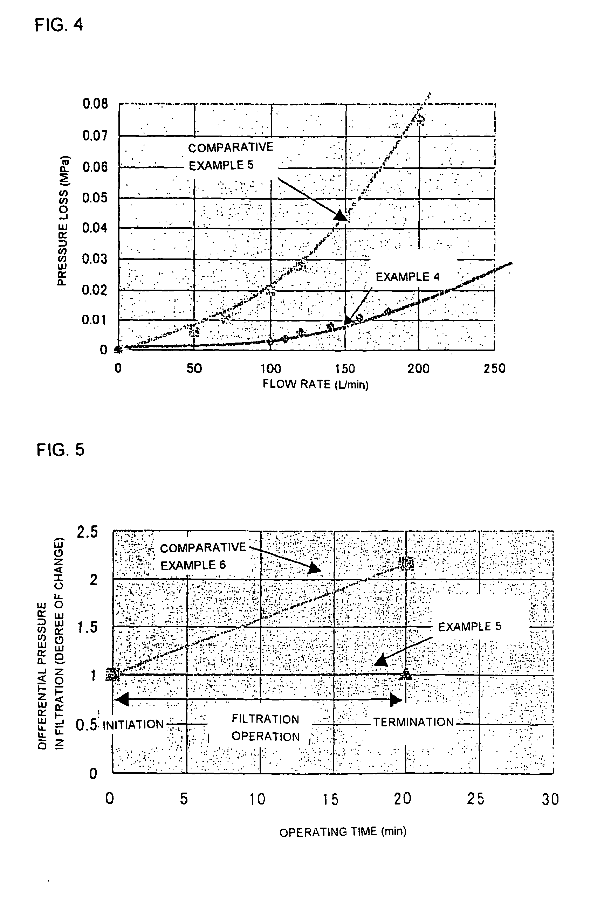

A polyethylene net which had a warp diameter of 0.6 mm, a warp diameter/weft diameter ratio of 1.7:1, a thickness at the intersection of warp and weft of 0.73 mm, a warp pitch of 4 mm, a warp pitch/weft pitch ratio of 1:4, and a warp/weft intersection angle of 56° was used, as a feed-side passage material for use in the invention (see Fig. 1), to produce a spiral separation membrane element having a diameter of 20 cm and an overall length of 1 m. Pure water was passed on the feed side of this separation membrane element to measure the flow rate and the inlet/outlet pressure loss In this test, a valve disposed in the line of the perforated cored central tube was closed in order to prevent the pure water from flowing into the permeation side The results obtained are shown in Fig 4.

### COMPARATIVE EXAMPLE 5

A polypropylene net which had a warp diameter of 0.6 mm, a warp diameter/weft diameter ratio of 2:1, a thickness at the intersection of warp and weft of 0.71 mm, a warp pitch of 4 mm, a warp pitch/weft pitch ratio of 1:1, and a warp/weft intersection angle of 50° was used to produce a spiral separation membrane element having a diameter of 20 cm and an overall length of 1 m Pure water was passed on the feed side of this separation membrane element to measure the flow rate and the inlet/outlet pressure loss. In this test, a valve disposed in the line of the perforated cored central tube was closed in order to prevent the pure water from flowing into the permeation side. The results obtained are shown in Fig. 4.

Comparison between Example 4 and Comparative Example 5 shows that also in the actual spiral separation membrane element, the feed-side passage material of Example 4 is more effective in reducing the pressure loss than the feed-side passage material of Comparative Example 5.

### EXAMPLE 5

A polyethylene net which had a warp diameter of 0.6 mm, a warp diameter/weft diameter ratio of 1.7:1, a thickness at the intersection of warp and weft of 0.73 mm, a warp pitch of 4 mm, a warp pitch/weft pitch ratio of 1:4, and a warp/weft intersection angle of 56° was used, as a feed-side passage material for use in the invention (see Fig. 1), to produce a spiral separation membrane element having a diameter of 20 cm and an overall length of 1 m. This separation membrane element was operated for full filtration using well water as feed water The well water had a turbidity of about 9 NTU and the filtration rate was 2.5 m³/h. Every 20 minutes, cleaning and flushing were conducted once The difference between the feed-side inlet pressure and the filtration-side pressure in the spiral separation membrane element in this operation was determined The results obtained are shown in Fig. 5

### COMPARATIVE EXAMPLE 6

A polypropylene net which had a warp diameter of 0.6 mm, a warp diameter/weft diameter ratio of 2:1, a thickness at the intersection of warp and weft of 0.71 mm, a warp pitch of 4 mm, a warp pitch/weft pitch ratio of 1:1, and a warp/weft intersection angle of 50° was used to produce a spiral separation membrane element having a diameter of 20 cm and an overall length of 1 m This separation membrane element was operated for full filtration using well water as feed water. The well water had a turbidity of about 9 NTU and the filtration rate was 2.5 m³/h. Every 20 minutes, cleaning and flushing were conducted once The difference between the feed-side inlet pressure and the filtration-side pressure in the spiral separation membrane element in this operation was determined. The results obtained are shown in Fig. 5.

In the separation membrane element of Comparative Example 6, suspended ingredients were caught by the feed-side passage material at the feed-water inlet and thus constituted a resistance to heighten the feed pressure, resulting in an increased differential pressure in the filtration. In contrast, in the separation membrane element of Example 5, the feed-side passage material had a low passage resistance and, hence, suspended ingredients did not stagnate at the feed-water inlet. Consequently, no increase in feed-water inlet pressure occurred in the separation membrane element of Example 5. It could be seen from the above comparison that the feed-side passage material according to the invention is effective

It should further be apparent to those skilled in the art that various changes in form and detail of the invention as shown and described above may be made It is intended that such changes be included within the spirit and scope of the claims appended hereto.

This application is based on Japanese Patent Application No 2003-078129 filed March 30, 2003, the disclosure of which is incorporated herein by reference in its entirety.

## Claims

1. A spiral separation membrane element which comprises a perforated cored central tube and, wound therearound, one or more separation membranes, one or more feed-side passage materials, and one or more permeation-side passage materials, wherein the feed-side passage materials each have warps extending almost parallel with the direction of flow of a feed liquid and wefts which are thinner than the warps, and a ratio of a pitch of the warps to a pitch of the wefts is 1/1.5 to 1/6

2. The spiral separation membrane element as claimed in claim 1, wherein a ratio of the warp diameter to the weft diameter in the feed-side passage materials is 2.5/1 or smaller.

3. The spiral separation membrane element as claimed in claim 1, wherein the ratio of a pitch of the warps to a pitch of the wefts is 1/3 to 1/5

4. The spiral separation membrane element as claimed in claim 1, wherein the warp pitch is 2.5-5 mm, and the weft pitch is 10-20 mm

5. The spiral separation membrane element as claimed in claim 1, wherein the warp/weft intersection angle is 0-80°

6. The spiral separation membrane element as claimed in claim 5, wherein the angle is 30-70°.

7. The spiral separation membrane element as claimed in claim 2, wherein the ratio is 1.1/1 to 2.3/1.

8. The spiral separation membrane element as claimed in claim 1, wherein the passage material has a thickness of 0.5-1.5 mm at a warp/weft intersection.

9. A spiral separation membrane element which comprises a perforated cored central tube and, wound therearound, one or more separation membranes, one or more feed-side passage materials, and one or more permeation-side passage materials, wherein the feed-side passage materials each have warps extending almost parallel with the direction of flow of a feed liquid and wefts which are thinner than the warps, and a ratio of the warp diameter to the weft diameter is 2.5/1 or smaller

10. The spiral separation membrane element as claimed in claim 9, wherein the warp pitch is 2.5-5 mm, and the weft pitch is 10-20 mm

11. The spiral separation membrane element as claimed in claim 9, wherein the warp/weft intersection angle is 0-80°

12. The spiral separation membrane element as claimed in claim 11, wherein the angle is 30-70°.

13. The spiral separation membrane element as claimed in claim 9, wherein the ratio is 1.1/1 to 2.3/1

14. The spiral separation membrane element as claimed in claim 9, wherein the passage material has a thickness of 0.5-1.5 mm at a warp/weft intersection
